# EUROPEAN PATENT SPECIFICATION

(11) **EP 0 749 227 B1**
(45) Date of publication and mention of the grant of the patent: **19.01.2005**
(21) Application number: 96109595.7
(22) Date of filing: 14.06.1996
(51) Int. Cl.: H04L 25/493

(54) **Transmission using pulse position coding**
Übertragung durch Pulslagenkodierung
Transmission utilisant un codage d'impulsions en position

(30) Priority: 15.06.1995 JP 14925795
(43) Date of publication of application: 18.12.1996
(73) Proprietor: SHARP KABUSHIKI KAISHA, Osaka-shi, Osaka-fu 545-0013 (JP)
(72) Inventor: Kokuhata, Yoshiyuki, Nara-shi, Nara-ken (JP); Ise, Masahiro, Kashihara-shi, Nara-ken (JP)
(74) Representative: Müller, Frithjof E., Dipl.-Ing.

(56) References cited:
- EP-A- 0 297 623
- US-A- 4 937 468
- PATENT ABSTRACTS OF JAPAN vol. 014, no. 055 (E-0882), 31 January 1990 (1990-01-31) & JP 01 279621 A (CANON INC), 9 November 1989 (1989-11-09)
- PATENT ABSTRACTS OF JAPAN vol. 007, no. 107 (E-174), 11 May 1983 (1983-05-11) & JP 58 030223 A (MATSUSHITA DENKI SANGYO KK), 22 February 1983 (1983-02-22)
- PATENT ABSTRACTS OF JAPAN vol. 011, no. 113 (E-497), 9 April 1987 (1987-04-09) & JP 61 260744 A (SHARP CORP), 18 November 1986 (1986-11-18)

## Description

### BACKGROUND OF THE INVENTION

### 1. Field of the Invention:

The present invention relates to a signal transmission device which is driven with a low power source such as a battery and transmits a signal between circuits having respective different grounds (GNDs) and separate power sources, used for a portable information apparatus, an information terminal apparatus, a liquid crystal display module, an image processing apparatus, and the like.

### 2. Description of the Related Art:

In recent years, portable information apparatuses have been markedly developed. Since such portable information apparatuses are driven with a battery and the like having a short life, reducing the power consumption is a problem to be overcome in the design of circuits for the portable information apparatuses.

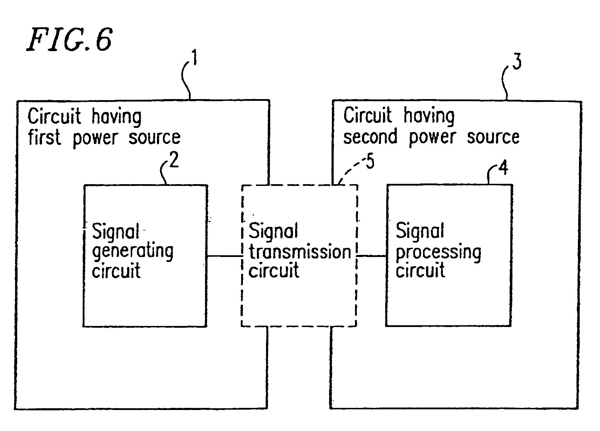

Figure **6** is a block diagram of the configuration for signal transmission between two circuits including a conventional signal transmission device.

Referring to Figure **6**, a circuit **1** having a first power source (not shown) includes a signal generating circuit **2**, while a circuit **3** having a second power source (not shown) includes a signal processing circuit **4**. A signal transmission circuit **5** is provided between the signal generating circuit **2** and the signal processing circuit **4** for transmitting a signal from the signal generating circuit **2** to the signal processing circuit **4**. A photocoupler is used as the signal transmission circuit **5** in this conventional example.

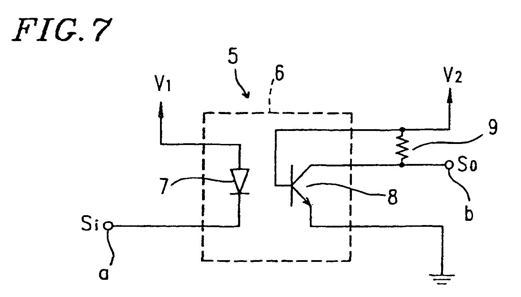

Figure **7** is a circuit diagram of the configuration of the signal transmission circuit **5** shown in Figure **6**.

Referring to Figure **7**, a photocoupler **6** includes a light emitting diode (LED) **7** on the primary side and a phototransistor **8** on the secondary side disposed to face each other. A source voltage V₁, of the first power source is applied to an anode of the LED **7**, while a transmission signal Sᵢ to be transmitted is input into a cathode of the LED **7**. A source voltage V₂ of the second power source is applied to a base of the phototransistor **8**. The source voltage V₂ is also applied to a collector of the phototransistor **8** via a resistance **9** to be pulled up. An emitter of the phototransistor **8** is connected to the ground (GND) of the second power source.

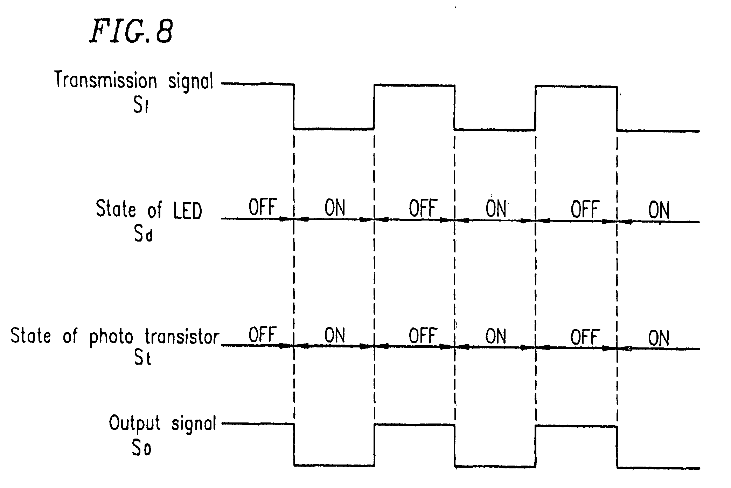

The operation of the signal transmission circuit of Figure **7** will be described with reference to Figure **8**. In the following description, it is assumed that the transmission signal **S**_{**i**} input into the cathode of the LED **7** is transmitted to be output as an output signal **S**_{**o**} at the collector of the phototransistor **8**.

The input transmission signal **S**_{**i**} shown in Figure **8** is input into a terminal **a** of the LED **7**. As shown in Figure **8**, a state **S**_{**d**} of the LED **7** of the photocoupler **6** repeats ON and OFF depending on the input transmission signal **S**_{**i**}. In response to the state **S**_{**d**}, a state **S**_{**t**} of the phototransistor **8** of the photocoupler **6** also repeats ON and OFF, thereby outputting the output signal **S**_{**o**} from a terminal **b**.

Both the LED **7** and the phototransistor **8** are ON during the LOW-level period of the input transmission signal **S**_{**i**}, allowing a current to continue flowing. This indicates that the longer the LOW-level period of the input transmission signal **S**_{**i**} is, the larger the power consumption is.

Japanese Laid-Open Patent Publication No. 5-308244 discloses a signal transmission circuit where the leading edge and the trailing edge of a transmission pulse signal are detected and short pulse signals having a pulse width sufficiently smaller than that of the transmission pulse signal are transmitted via a photocoupler, to recover the original transmission pulse signal. With this configuration, since short pulse signals are transmitted, the photocoupler can be driven for a shorter time period, minimizing power loss and thereby reducing power consumption.

In the above conventional signal transmission circuit, pulse signals having a pulse width sufficiently smaller than that of the transmission pulse signal are transmitted via the photocoupler. Such a photocoupler requires power supplies both on the primary and secondary sides thereof, causing large power loss.

Another problem of the conventional photocoupler is that the delay time is as large as several hundred nanoseconds (not shown in Figure **8**). Therefore, the response of the photocoupler to the input signal is slow; i.e., the time period from the input of the transmission signal **S**_{**i**} into the terminal a till the output of the output signal **S**_{**o**} from the terminal **b** is long.

Further information regarding the prior art can be found in EP 0 297 623 which teaches switching system for capacitor charging/discharging as shown in Figure 9. wherein first and second switches such as transistors are connected to a charge storage member such as a capacitance. The capacitance is charged through the first transistor from a positive supply when the transistor becomes conductive. The capacitance is discharged through the second transistor to a reference potential such as ground when the second transistor becomes conductive. The conductivities of the first and second transistors are controlled by pulses from a pulse source such as a transformer. The transformer primary produces a pulse of one polarity upon the occurrence of the leading edge of an input signal and a pulse of an opposite polarity upon the occurrence of the trailing edge of the input signal. Two secondary windings are respectively connected in opposite polarities to the bases of the first and second transistors to provide for the conductivity of only one of the transistors at any one time. The transformers saturate the conductive transistor to prolong on a limited basis the time during which the transistor remains conductive. The other one of the transistors is made instantaneously non-conductive by providing for an instantaneous discharge of the stored base charge between the base and emitter of the transistor. A constant current source is electrically in parallel with the first transistor to sustain the capacitance charge at a high level after the limited period of time in which the first transistor remains conductive. A low frequency transistor is connected in parallel with the second transistor to sustain the discharge of the capacitance after the limited period of time in which the second transistor remains conductive.

US 4,937,468 teaches an isolation circuit for pulse waveforms wherein a is load controlled by a pulse waveform from a source. The source and load are electrically isolated by using two monostable circuits to detect the leading and trailing edge of the pulse waveform, two pulse transformers to isolate the source and the load. and a bistable circuit to reconstruct the original pulse waveform.

JP 1-279621 teaches a pulse signal transmission circuit for precisely restoring a transmission pulse that is pulse-width modulated in a reception side by providing a flip flop that detects the edge of the transmitted transmission pulse and that executes a signal inversion processing in synchronization with the edge detection.

### SUMMARY OF THE INVENTION

For overcoming the aforementioned deficiencies of the prior art. the present invention proposes a signal transmission device in accordance with claim 1. Preferred embodiments of the invention are set forth in the dependent claims.

According to the present invention, a first short pulse-width signal is generated in response to the detection of the leading edge of a transmission signal to be transmitted, while a second short pulse-width signal is generated in response to the detection of the trailing edge of the transmission signal. These pulse signals are transmitted from the primary side to the secondary side of a pulse transformer. The transmission signal is recovered on the secondary side by controlling the switching of transistors on the secondary side to charge or discharge a capacitor. By using the pulse transformer in place of the conventional photocoupler, the timing lag at the signal transmission is reduced, and thus power consumption is further reduced. Specifically, when a short pulse signal with a same pulse width is transmitted, power consumption required when the pulse transformer is used can be reduced to at least about one-fifth of that required when the conventional photocoupler is used.

Thus, the invention described herein makes possible the advantage of providing a signal transmission device with enhanced response and reduced power consumption.

These and other advantages of the present invention will become apparent to those skilled in the art upon reading and understanding the following detailed description with reference to the accompanying figures.

### BRIEF DESCRIPTION OF THE DRAWINGS

Figure 1 is a block diagram showing a configuration for signal transmission between two circuits including a signal transmission device according to the present invention.
Figure 2 is a circuit diagram showing a first configuration example of a signal transmission circuit shown in Figure **1** according to the present invention.
Figure **3** is a timing chart showing waveforms of signals used in the signal transmission circuit of Figure 2.
Figure **4** is a circuit diagram showing a second configuration example of the signal transmission circuit according to the present invention.
Figure **5** is a circuit diagram showing a third configuration example of the signal transmission device according to the present invention.
Figure **6** is a block diagram showing a configuration for signal transmission between two circuits including a conventional signal transmission device.
Figure **7** is a circuit diagram of a conventional signal transmission circuit shown in Figure **6**.
Figure **8** is a timing chart showing waveforms of signals used in the conventional signal transmission circuit of Figure **6**.

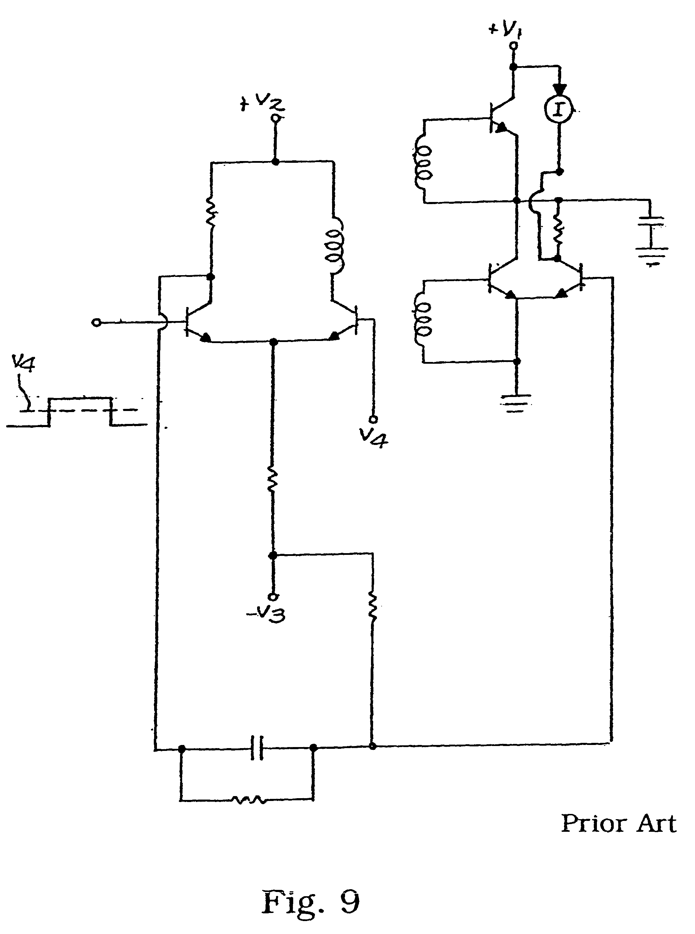

Figure 9 is a circuit diagram of a conventional signal transmission circuit.

### DESCRIPTION OF THE PREFERRED EMBODIMENTS

The present invention will be described by way of example with reference to the accompanied drawings as follows.

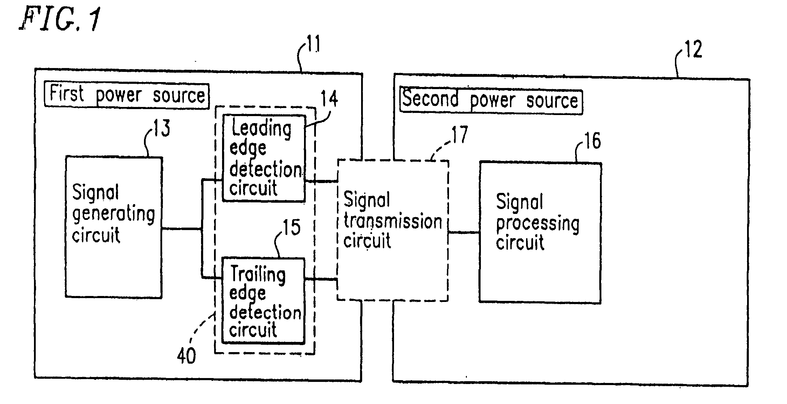

Figure **1** is a block diagram showing the connection between a signal transmission circuit section **11** including a detection circuit **40** and a signal receiving circuit section **12** via a signal transmission circuit **17** according to the present invention.

Referring to Figure **1**, the signal transmission circuit section **11** and the signal receiving circuit section **12** are provided with first and second power sources, respectively, which are separate and independent from each other. The first and second power sources can be cells, batteries, and the like, or can be composed of 3-terminal regulator ICs.

The signal transmission circuit section **11** and the signal receiving circuit section **12** are preferably isolated from each other to prevent noise generated in the signal transmission circuit section **11** from entering the signal receiving circuit section **12** and vice versa. If the signal transmission circuit section **11** and the signal receiving circuit section **12** will not interfere with each other, they are not necessarily required to be isolated from each other. In such a case, the first and second power sources are not necessarily required to be separate and independent from each other.

The signal transmission circuit section **11** having the first power source includes a signal generating circuit **13** which generates a transmission signal to be transmitted and the detection circuit **40**. The detection circuit **40** includes a leading edge detection circuit **14** and a trailing edge detection circuit **15** both connected to the signal generating circuit **13** for receiving the generated transmission signal.

The leading edge detection circuit **14** detects the leading edge of the transmission signal. Upon detection of the leading edge of the transmission signal, the leading edge detection circuit **14** outputs a short pulse input signal with a short pulse width, preferably in the range of 0.1 µsec to 3 µsec. The trailing edge detection circuit **15** detects the trailing edge of the transmission signal. Upon detection of the trailing edge of the transmission signal, the trailing edge detection circuit **15** outputs a short pulse input signal with a short pulse width, preferably in the range of 0.1 µsec to 3 µsec.

The signal receiving circuit section **12** is connected with the signal transmission circuit section **11** via the signal transmission circuit **17**. The signal receiving circuit section **12** includes a signal processing circuit **16** which receives signals from the leading edge detection circuit **14** and the trailing edge detection circuit **15** via the signal transmission circuit **17**.

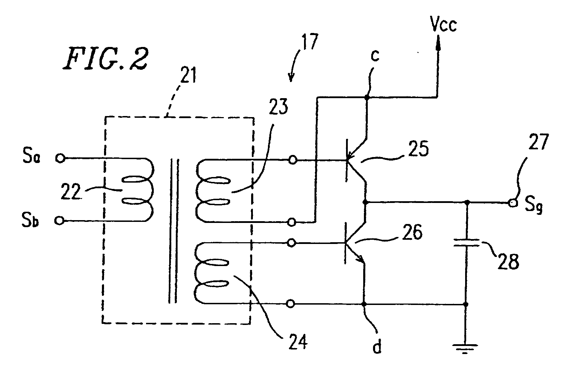

Figure **2** shows a first example of the configuration of the signal transmission circuit **17** shown in Figure **1**.

Referring to Figure **2**, a pulse transformer (PT) **21** as the signal transmission circuit includes a primary coil **22** on the primary side and secondary coils **23** and **24** on the secondary side. The primary and secondary coils of the signal transmission circuit **17** need to be electrically insulated from each other. The primary coil **22** receives a short pulse input signal **S**_{**a**} sent from the leading edge detection circuit **14** at one terminal thereof and a short pulse input signal **S**_{**b**} sent from the trailing edge detection circuit **15** at the other terminal. The secondary coil **23** is connected with a base of a transistor **25** for charging at one terminal thereof and an emitter of the transistor **25** at the other terminal. The secondary coil **24** is connected with a base of a transistor **26** for discharging at one terminal thereof and an emitter of the transistor **26** at the other terminal. A joint **c** of the other terminal of the secondary coil **23** and the emitter of the transistor **25** is applied with a source voltage **V**_{**cc**} of the second power source. The collectors of the transistors **25** and **26** are connected to an output terminal **27**. A joint **d** of the other terminal of the secondary coil **24** and the emitter of the transistor **26** is connected to one terminal of a capacitor **28** and also grounded. The other terminal of the capacitor **28** is connected to the output terminal **27**. Thus, the signal transmission circuit **17** composed of the pulse transformer **21** which uses three coils for signal transmission from the primary side to the secondary side thereof is constructed.

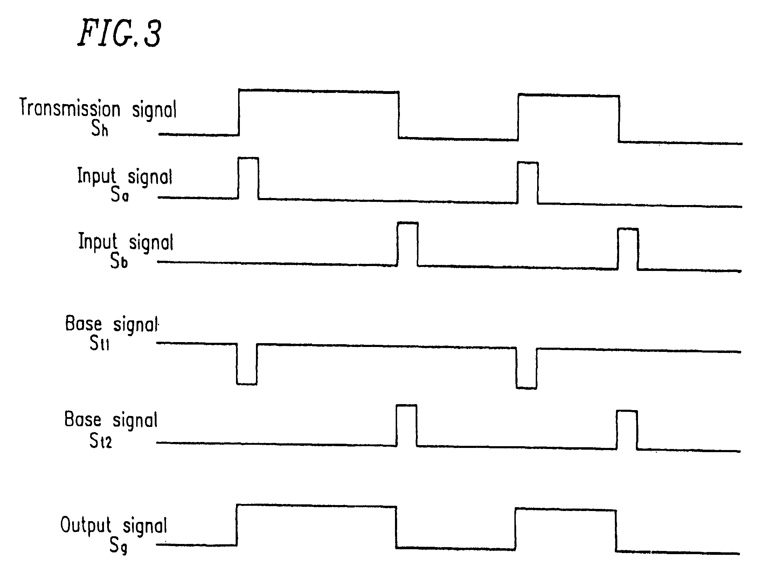

Now, referring to Figure **3**, the operation of the signal transmission circuit of Figure **2** will be described. Figure **3** is a timing chart showing waveforms of signals used in the signal transmission circuit **17**.

A transmission signal **S**_{**h**} output from the signal generating circuit **13** is input into the leading edge detection circuit **14** and the trailing edge detection circuit **15**. Upon detection of the leading edge of the transmission signal **S**_{**h**}, the leading edge detection circuit **14** outputs the pulse input signal **S**_{**a**} with a short pulse width. Upon detection of the trailing edge of the transmission signal **S**_{**h**}, the trailing edge detection circuit **15** outputs the pulse input signal **S**_{**b**} with a short pulse width.

The pulse input signal **S**_{**a**} or **S**_{**b**} is then input into the primary side of the pulse transformer **21**. When the pulse input signal **S**_{**a**} or **S**_{**b**} is input into the primary side of the pulse transformer **21**, a base signal **S**_{**t1**} or **S**_{**t2**} is induced on the secondary side of the pulse transformer **21** based on the pulse input signal **S**_{**a**} or **S**_{**b**}. The transistors **25** and **26** are switched ON or OFF in response to the induced signal, allowing the capacitor **28** to be charged or discharged.

Pulse signals such as the base signals **S**_{**t1**} and **S**_{**t2**} shown in Figure **3** are input into the bases of the transistors **25** and **26**, respectively. The transistor **25** is ON when the base signal **S**_{**t1**} is in a LOW level. When the transistor **25** is ON, the capacitor **28** is applied with the source voltage **V**_{**cc**} of the second power source. The capacitor **28** is thus charged. The capacitor **28** holds the voltage level of the source voltage **V**_{**cc**} of the second power source until the transistor **26** is turned ON. Thus, the output signal **S**_{**g**} of a HIGH level is output from the output terminal **27**. The transistor **25** is of a PNP type, while the transistor **26** is of an NPN type.

The transistor 26 receives the base signal **S**_{**t2**}**.** The transistor **26** is ON when the base signal **S**_{**t2**} is in the HIGH level. This allows charges stored in the capacitor **28** to be discharged, lowering the voltage of the capacitor **28** to the ground voltage level. Thus, the output signal **S**_{**g**} of the LOW level is output from the output terminal **27**.

As a result, the output signal **S**_{**g**} which is the same as the transmission signal **S**_{**h**} output from the signal generating circuit **13** is output from the output terminal **27**. In this way, the transmission signal **S**_{**h**} can be transmitted to the signal processing circuit **16** of the signal receiving circuit section **12** having the second power source.

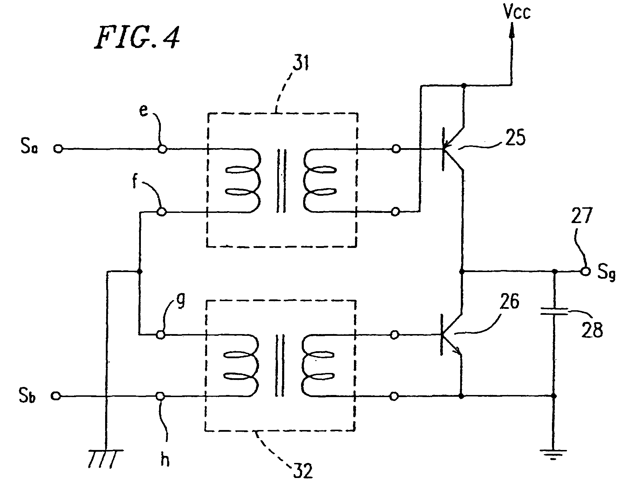

Figure **4** is a circuit diagram showing a second example of the configuration of the signal transmission circuit **17** shown in Figure **1**.

The signal transmission circuit of Figure **4** is the same as the signal transmission circuit of Figure **2** except that two pulse transformers **31** and **32** are employed in place of the pulse transformer **21**. The basic operation of the signal transmission circuit of Figure **4** is the same as that of the signal transmission circuit of Figure **2**.

The pulse input signal **S**_{**a**} shown in Figure **3** is input into a terminal **e** of a primary coil of the pulse transformer **31**, while the pulse input signal **S**_{**b**} shown in Figure **3** is input into a terminal **h** of a primary coil of the pulse transformer **32**. The other terminals of the primary coils of the pulse transformers **31** and **32**, namely terminals **f** and **g**, are connected together and grounded. The base signal **S**_{**t1**} or **S**_{**t2**} corresponding to the pulse input signal **S**_{**a**} or **S**_{**b**} is induced on the secondary side of the pulse transformer **31** or **32.** This allows the base of the transistor **25** or **26** to be supplied with the base signal **S**_{**t1**} or **S**_{**t2**} shown in Figure **3**. The transistors **25** and **26** are turned ON or OFF in response to the base signals **S**_{**t1**} and **S**_{**t2**}, respectively, allowing the capacitor **28** to be charged or discharged. As a result, the output signal **S**_{**g**} which is the same as the transmission signal **S**_{**h**} is output from the output terminal **27**.

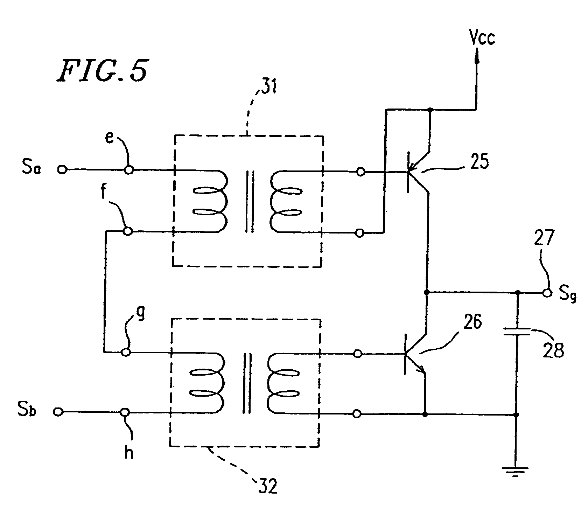

Figure **5** is a circuit diagram showing a third example of the configuration of the signal transmission circuit **17** shown in Figure **1**.

The signal transmission circuit of Figure **5** is the same as the signal transmission circuit of Figure **4** except that the terminals **f** and **g** of the primary coils of the pulse transformers **31** and **32** are not grounded. The basic operation of the signal transmission circuit of Figure **5** is the same as that of the signal transmission circuit of Figure **2**.

A signal corresponding to the pulse input signal **S**_{**a**} or **S**_{**b**} is induced on the secondary side of the pulse transformer **31** or **32**. This allows the base of the transistor **25** or **26** to be supplied with the base signals **S**_{**t1**} or **S**_{**t2**} shown in Figure 3. The transistors **25** and **26** are turned ON or OFF in response to the base signals **S**_{**t1**} and **S**_{**t2**}, respectively, allowing the capacitor **28** to be charged or discharged. As a result, the output signal **S**_{**g**} which is the same as the transmission signal **S**_{**h**} is output from the output terminal **27**.

According to an embodiment of the present invention, in the signal transmission circuit section and the signal receiving circuit section which have respective independent grounds and power sources electrically isolated from each other, a transmission signal is transmitted from the signal transmission circuit section to the signal receiving circuit section in the following manner. That is, the pulse input signal **S**_{**a**} with a short pulse width is output in response to the detection of the leading edge of the transmission signal, while the pulse input signal **S**_{**b**} with a short pulse width is output in response to the detection of the trailing edge of the transmission signal. A signal corresponding to the pulse input signal **S**_{**a**} or **S**_{**b**} is induced on the secondary side of the pulse transformer. The primary and secondary sides of the pulse transformer are preferably isolated from each other. A switch section such as a transistor connected to the secondary side is turned ON or OFF in response to the induced signal. The transmission signal can be recovered in this way.

Thus, the use of the pulse transformer serves to reduce the timing lag at the signal transmission which conventionally occurs when a photocoupler is used, realizing the reduction of power consumption. Specifically, when a short pulse signal with a same pulse width is transmitted, power consumption required when the pulse transformer is used can be reduced to at least about one-fifth of that required when the conventional photocoupler is used.

In the signal transmission via the pulse transformer as described above, pulses which can be transmitted via the pulse transformer are restricted. The restriction is determined by the product of the applied voltage and the pulse width, called an ET product. A transformer having a large ET product of 20 to 30 V·µsec is commercially available. However, when a voltage of 5 V is applied to a pulse transformer of 30 V·µsec, the maximum pulse width allowable for the pulse transformer is 6 µsec. This indicates that only a short pulse can be transmitted via the pulse transformer.

Thus, according to the present invention, a pulse signal with a short pulse width can be transmitted via the pulse transformer in place of the conventional photocoupler. By using the pulse transformer, current loss and thus power consumption can be reduced. Further, the timing lag at the signal transmission can be reduced. Specifically, power consumption can be reduced to one-tenth of the conventional power consumption (when the duty ratio is 50%). The timing lag at the signal transmission can be reduced to several tens of nanoseconds.

Various other modifications will be apparent to and can be readily made by those skilled in the art without departing from the scope of this invention. Accordingly, it is not intended that the scope of the claims appended hereto be limited to the description as set forth herein, but rather that the claims be broadly construed.

## Claims

1. A signal transmission device for transmitting a transmission signal between at least two circuits having different power sources, comprising:
a signal leading edge detection section (14) for outputting a first short pulse-width signal upon detection of a leading edge of the transmission signal;
a signal trailing edge detection section (15) for outputting a second short pulse-width signal upon detection of a trailing edge of the transmission signal;
a transformer section (12, 31, 32) having a primary coil (22) and a secondary coil (23, 24), the first and second short pulse-width signals output from the signal leading edge detection section (14) and the signal trailing edge detection section (15) being transmitted from the primary coil (22) to the secondary coil (23, 24); and
a signal recovery section (25, 26, 28) for recovering the transmission signal from the first and second short pulse-width signals transmitted to the secondary coil (23, 24) of the transformer section (12, 31, 32), wherein
the primary coil (22) and the secondary coil (23, 24) are electrically insulated from each other.
the signal recovery section includes capacitance means (28), first switching means (26) for discharging the capacitance means (28) and second switching means (25) for charging the capacitance means (28).
said signal recovery section is configured and adapted to effect the charging and discharging of the capacitance means (28) by turning on and off the first and second switching means (26, 25) to recover the transmission signal,
said first and second switching means are directly connected to respective terminals of said secondary coil, and
an output of said capacitance means constitutes said recovered transmission signal.

2. The signal transmission device according to claim 1. wherein the first short pulse-width signal is input into one terminal of the primary coil (22) and the second short pulse-width signal is input into the other terminal of the primary coil (22).

3. The signal transmission device according to claim 1, wherein the second switching means (25) is a PNP transistor.

4. The signal transmission device according to claim 1, wherein the first switching

5. The signal transmission device according to claim 1, wherein said signal transmission device is configured and adapted such that said first switching means is supplied with a first signal, in response to which it switches for discharging said capacitance means, and said second switching means is supplied with a second signal, in response to which it switches for charging said capacitance means.

6. The signal transmission device according to claim 5, wherein said first and second signals are said first and second short pulse-width signal as received by the secondary coil, respectively.

## Patentansprüche

1. Signalübertragungsvorrichtung zum Übertragen eines Übertragungssignals zwischen wenigstens zwei Schaltungen, die verschiedene Leistungsquellen besitzen, mit:
einem Signalvorderflanken-Erfassungsabschnitt (14), der ein erstes Signal mit geringer Impulsbreite ausgibt, wenn er eine Vorderflanke des Übertragungssignals erfasst;
einem Signalhinterflanken-Erfassungsabschnitt (15), der ein zweites Signal mit geringer Impulsbreite ausgibt, wenn er eine Hinterflanke des Übertragungssignals erfasst;
einem Transformatorabschnitt (12, 13, 32) mit einer Primärwicklung (22) und einer Sekundärwicklung (23, 24), wobei das erste und das zweite Signal mit geringer Impulsbreite, die von dem Signalvorderflanken-Erfassungsabschnitt (14) bzw. von dem Signalhinterflanken-Erfassungsabschnitt (15) ausgegeben werden, von der Primärwicklung (22) an die Sekundärwicklung (23, 24) übertragen werden; und
einem Signalwiederherstellungsabschnitt (25, 26, 28), der das Übertragungssignal aus dem ersten und dem zweiten Signal mit geringer Impulsbreite, die an die Sekundärwicklung (23, 24) des Transformatorabschnitts (12, 31, 32) übertragen werden, wiederherstellt, wobei
die Primärwicklung (22) und die Sekundärwicklung (24) voneinander elektrisch isoliert sind,
der Signalwiederherstellungsabschnitt Kapazitätsmittel (28), erste Schaltermittel (26) zum Entladen der Kapazitätsmittel (28) und zweite Schaltermittel (25) zum Laden der Kapazitätsmittel (28) enthält,
der Signalwiederherstellungsabschnitt so konfiguriert und beschaffen ist, dass er das Laden und Entladen der Kapazitätsmittel (28) dadurch ausführt, dass er die ersten und die zweiten Schaltermittel (26, 25) schließt und öffnet, um das Übertragungssignal wiederherzustellen,
die ersten und die zweiten Schaltermittel direkt mit entsprechenden Anschlüssen der Sekundärwicklung verbunden sind und
ein Ausgang der Kapazitätsmittel das wiederhergestellte Übertragungssignal bildet.

2. Signalübertragungsvorrichtung nach Anspruch 1, bei der das erste Signal mit geringer Impulsbreite in einen Anschluss der Primärwicklung (22) eingegeben wird und das zweite Signal mit geringer Impulsbreite in den anderen Anschluss der Primärwicklung (22) eingegeben wird.

3. Signalübertragungsvorrichtung nach Anspruch 1, bei der die zweiten Schaltermittel (25) ein PNP-Transistor sind.

4. Signalübertragungsvorrichtung nach Anspruch 1, bei der die ersten Schaltermittel (26) ein NPN-Transistor sind.

5. Signalübertragungsvorrichtung nach Anspruch 1, wobei die Signalübertragungsvorrichtung so konfiguriert und beschaffen ist, dass die ersten Schaltermittel mit einem ersten Signal versorgt werden und in Reaktion auf dieses erste Signal schalten, um die Kapazitätsmittel zu entladen, und die zweiten Schaltermittel mit einem zweiten Signal versorgt werden und in Reaktion auf dieses zweite Signal schalten, um die Kapazitätsmittel zu laden.

6. Signalübertragungsvorrichtung nach Anspruch 5, bei der das erste und das zweite Signal das erste bzw. das zweite Signal mit geringer Impulsbreite sind, die von der Sekundärwicklung empfangen werden.

## Revendications

1. Dispositif de transmission de signal pour transmettre un signal de transmission entre au moins deux circuits ayant des sources d'énergie différentes, comprenant :
une section de détection de flanc avant de signal (14) pour sortir un premier signal de largeur d'impulsion courte lors de la détection d'un flanc avant du signal de transmission ;
une section de détection de flanc arrière de signal (15) pour sortir un second signal de largeur d'impulsion courte lors de la détection d'un flanc arrière du signal de transmission ;
une section de transformation (12, 31, 32) ayant une bobine primaire (22) et une bobine secondaire (23, 24), les premier et second signaux de largeur d'impulsion courte sortis en provenance de la section de détection de flanc avant de signal (14) et de la section (15) de détection de flanc arrière de signal étant transmis de la bobine primaire (22) à la bobine secondaire (23, 24) ; et
une section de rétablissement de signal (25, 26, 28) pour rétablir le signal de transmission à partir des premier et second signaux de largeur d'impulsion courte transmis à la bobine secondaire (23, 24) de la section de transformation (12, 31, 32), dans lequel
la bobine primaire (22) et la bobine secondaire (23, 24) sont électriquement isolées l'une de l'autre,
la section de rétablissement de signal comprend un moyen formant condensateur (28), un premier moyen de commutation (26) pour décharger le moyen formant condensateur (28), et un second moyen de commutation (25) pour charger le moyen formant condensateur (28),
ladite section de rétablissement de signal est configurée et conçue pour effectuer la charge et la décharge du moyen formant condensateur (28) en mettant en et hors fonction les premier et second moyens de commutation (26, 25) pour rétablir le signal de transmission,
lesdits premier et second moyens de commutation sont directement reliés à des bornes respectives de ladite bobine secondaire, et
une sortie dudit moyen formant condensateur constitue ledit signal de transmission rétabli.

2. Dispositif de transmission de signal selon la revendication 1, dans lequel le premier signal de largeur d'impulsion courte est entré dans une borne de la bobine primaire (22) et le second signal de largeur d'impulsion courte est entré dans l'autre borne de la bobine primaire (22).

3. Dispositif de transmission de signal selon la revendication 1, dans lequel le second moyen de commutation (25) est un transistor PNP.

4. Dispositif de transmission de signal selon la revendication 1, dans lequel le premier moyen de commutation (26) est un transistor NPN.

5. Dispositif de transmission de signal selon la revendication 1, dans lequel ledit dispositif de transmission de signal est configuré et conçu de sorte que ledit premier moyen de commutation est alimenté par un premier signal, en réponse auquel il commute pour décharger ledit moyen formant condensateur, et ledit second moyen de commutation est alimenté par un second signal, en réponse auquel il commute pour charger ledit moyen formant condensateur.

6. Dispositif de transmission de signal selon la revendication 5, dans lequel lesdits premier et second signaux sont lesdits premier et second signaux de largeur d'impulsion courte tels que respectivement reçus par la bobine secondaire.
